# EUROPEAN PATENT SPECIFICATION

(11) **EP 1 355 862 B1**
(45) Date of publication and mention of the grant of the patent: **29.09.2004**
(21) Application number: 01987735.6
(22) Date of filing: 08.10.2001
(51) Int. Cl.: C03B 37/05

(54) **APPARATUS FOR PRODUCING VITREOUS FIBRES BY CENTRIFUGAL SPINNING**
VORRICHTUNG ZUR HERSTELLUNG VON GLASARTIGEN FASERN DURCH ZENTRIFUGENSPINNEN
APPAREIL DESTINE A LA PRODUCTION DE FIBRES VITREUSES PAR FILAGE PAR CENTRIFUGATION

(30) Priority: 18.10.2000 EP 00122246; 28.12.2000 EP 00311744
(43) Date of publication of application: 29.10.2003
(73) Proprietor: Rockwool International A/S, 2640 Hedehusene (DK)
(72) Inventor: TONDER, Flemming, Weiss, DK-4450 Jyderup (DK)
(74) Representative: Lawrence, Peter Robin Broughton
(86) International application number: PCT/EP2001/011579
(87) International publication number: WO 2002/032822

(56) References cited:
- WO-A-99/59929
- FR-A- 2 777 881
- US-A- 3 015 127

## Description

This invention relates to spinner assemblies comprising an air supply system and at least one centrifugal spinner unit for the manufacture of man-made vitreous fibres (MMVF), and in particular it relates to a novel air supply system for such an assembly.

A conventional way of forming MMV fibres involves fiberisation of a melt using a centrifugal spinner unit which comprises a spinner unit housing and at least one fiberising rotor rotatably mounted on the housing for centrifugal fiberisation of vitreous melt supplied on to or into the rotor. In practice large amounts of air are provided through the spinner unit to entrain fibres formed off the one or more rotors as a cloud of fibres and to carry this cloud away from the spinner unit. Some of the air may be supplied at very high velocity (often referred to as primary air) close to the rotors to promote fiberisation whilst the remainder of the air (secondary air) may be supplied at lower velocities predominantly for the purpose of transporting the fibres away from the spinner unit. Conventionally there are air supply passages through the spinner unit leading to air supply outlet means from the spinner unit and from which the air is discharged to entrain the fibres. An air impellor is used for generating the flow of air through the air supply passages and outlets.

The impellor has to generate very large volumes of air in view of the productivity of centrifugal spinner units, especially at modern productivity levels. The need to generate high velocity primary air increases the demands on the impellor.

There have been some proposals in systems which do not use high velocity, primary, air (namely in US 4,119,421 and US 4,969,940) to provide low velocity, secondary, air by a fan located behind the spinner unit. Also it is proposed in US 3,015,127 to use a fan for generating a fiberising air flow in a rather different type of fiberising apparatus, namely one in which the air flow is forced through a flowing melt. It is also proposed in WO 99 599 29 A to use an impellar fan formed on the front face of a rotor in a cascade rotor process.

Although it might appear that a fan close to a spinner unit would be convenient and adequate, in practice the fan has to be extremely bulky and powerful if it is to generate enough air for optimum performance of a modern centrifugal spinner unit. Accordingly, in practice, locating a fan adjacent to a centrifugal spinner necessarily would increase still further the difficulties that already exist in providing a convenient and cost effective assembly of a melt supply, a centrifugal spinner unit and a collecting system. For instance the centrifugal spinner traditionally is very bulky and relatively immobile and positioning this in front of a very large air duct and fan would make the total apparatus even more bulky. This would increase the complexities of using the total assembly and, in particular, of servicing it.

A conventional factory for the manufacture of MMVF operates a plurality of spinner units. Instead of having an inconvenient and powerful fan adjacent to each unit, conventional practice in the industry involves providing a single blower plant for supplying pressurised air to a plurality of spinner units, distant from the units. Since the total apparatus which includes the spinner unit (for instance including the collector and collecting chamber) is very large the ducting which is necessary to lead the air from the blower plant to each of the spinner units can be very lengthy, for instance at least 30 metres and often 50 to 100 metres or more. Accordingly, this system avoids making the spinner apparatus unacceptably bulky but utilises high energy costs for driving the air through the lengthy large ducting, and the ducting occupies a large amount of space.

The productivity of spinner units is continuously increasing and this increases the problems of providing adequate air supply. In order to optimise production, it is increasingly necessary to be able to adjust the spinner unit, and even to move the spinner unit, during operation. The fixed centralised blower unit system does not lend itself to easy adjustment of the air to each spinner unit individually.

It would therefore be desirable to provide a more convenient and cost effective system for providing the air and, in particular, for providing it for a spinner unit which is versatile and easily adjustable as regards position and spinning conditions.

A spinner assembly according to the invention comprises an air supply system and at least one centrifugal spinner unit wherein
the or each centrifugal spinner unit comprises a spinner unit housing, at least one fiberising rotor rotatably mounted on the housing for centrifugal fiberisation of vitreous melt supplied onto or into the rotor, and air supply outlet means from within the housing for supply of a stream of air adjacent to the or each rotor for entrainment of fibres formed off the rotor or at least one of the rotors and air supply passages in the housing leading to the air supply outlet means, and
the air supply system comprises an air impellor for generating a flow of air through the air supply passages and the air supply outlet means,
characterised in that the air impellor is directly attached to the spinner unit or is indirectly attached to the spinner unit by ducting less than 15 metres in length and
the air impellor comprises at least one axial compressor comprising an air inlet zone, a compressor portion and an annular diffuser which discharges towards the air supply passages,
wherein the compressor portion comprises a prime mover and an annulus which leads from the air inlet zone and through which a compressor rotor is rotated by the prime mover,
and the compressor portion and/or the annular diffuser includes a stator wherein the stator minimises swirl in the diffuser,
and wherein the compressor is constructed so that the rotating compressor rotor draws air into the compressor portion and accelerates air into the diffuser and thereby causes air to travel through the diffuser under increasing pressure and reducing speed.

As a result of using the defined axial compressor as the air impellor, instead of a conventional fan type of impellor, it is now possible to provide a spinner assembly which is much more compact and easy to adjust and operate than has previously been possible, and it is possible to eliminate most or all of the ducting that previously has been provided around plants for the manufacture of MMV fibres. The defined axial compressor is particularly suited to be used in combination with a cascade spinner unit as described in our European application 00122246.2 filed on 18th October 2000. This combination is the preferred spinner assembly of the invention and is particularly compact.

The spinner assembly has a single air impellor which comprises at least one axial compressor. There may be two axial compressors, for instance arranged in series, but they serve as a single air impellor because they provide a single air supply. Usually there is either a single axial compressor or a pair of axial compressors in series.

The spinner assembly may include two or more centrifugal spinner units supplied with air by the single air impellor, but generally the spinner assembly only has a single centrifugal spinner unit, supplied by air from the single air impellor comprising the axial compressor, or axial compressors in series. This facilitates control of the air supply to the individual spinner unit.

Because the or each axial compressor is small it can be located close to the spinner unit without obstructing the necessary access to the spinner unit, for instance for servicing. Accordingly the axial compressor can conveniently be located generally on the same floor as the spinner unit and relatively close the spinner unit. Usually the length of the ducting connecting the spinner unit to the axial compressor (when they are separate) is less than 10 metres and often less than 5 metres, and often less than 3 metres. The axial compressor is preferably readily detachable from the ducting in order that it can be easily and rapidly replaced if there is mechanical failure.

The most compact form of apparatus has the air impellor (consisting of one axial compressor or axial compressors in series) directly attached to the spinner unit. Any interconnection between the impellor and spinner unit is preferably very short (usually less than 0.5 metres) and normally contains the minimum of connections necessary for leading the air from the outlet from the annular diffuser into the air supply passages of the spinner unit. The spinner assembly can have a single housing with the axial compressor at the rear of the housing and the spinner unit at the front of the housing. The impellor and the spinner unit are preferably attached releasably so that either can be replaced if there is mechanical failure.

The spinner unit may comprise a fiberising rotor mounted for rotation about a substantially vertical axis and comprising a disc or cup on to which or into which melt is poured and off which fibres are thrown from the surface of the disc or cup or through perforations in the walls of the cup. Typical apparatus of this type is described in WO91/13836.

The air supply outlet means are usually located around the fiberising rotor so as to blast air downwardly and to carry the fibres away from the periphery of the disc or cup. The air supply passages may discharge close to the periphery of the disc or cup or may discharge a small distance away from the periphery, in which event a burner may be provided to blast very hot air adjacent to the periphery of the disc or cup and between that periphery and the air stream formed by the axial compressor used in the invention.

The spinner unit may alternatively comprise at least one fiberising rotor mounted for rotation about a substantially horizontal axis. There can be just one rotor or two rotors, but preferably the spinner unit is a cascade spinner unit. Such a unit comprises at least three fiberising rotors mounted about a substantially horizontal axis whereby melt poured on to a first rotor is thrown on to subsequent rotors and is thrown off these, and optionally off the first rotor, as fibres. Thus a single air impellor can be directly or indirectly attached to a cascade spinner to provide the air supply that is required for fiberisation from all the rotors and for conveying all the fibres away from the spinner unit.

The air supply outlet means in a cascade spinner generally comprise primary air outlets associated with one or more of the fiberising rotors for blasting primary air substantially axially forward across the surface of the or each rotor. Generally primary air is supplied close to part or all of the periphery either of all the fiberising rotors or all the fiberising rotors except for the top rotor. Suitable cascade spinners and primary air outlets for them are described in GB-A-1559117, WO92/06047, WO92/12939 and WO92/12940.

In addition to the primary air which facilitates fibre formation and provides some transport of fibres, it is generally preferred to provide secondary air for conveying the fibres forwards from the cascade spinner, and so the assembly usually comprises secondary air supply outlets for supply of air distant from the surface of the or each rotor. Thus the primary air supply outlets are positioned close to the rotors and the secondary air supply outlets are positioned further away from the rotors, all in conventional manner.

A preferred spinner assembly according to the invention comprises a cascade spinner provided with primary and secondary air outlets and the air impellor (a single axial compressor or more than one axial compressor in series) mounted end to end as an integral spinner assembly unit. This unit preferably has a single housing which leads from the air inlet for the air impellor at one end to the fiberising rotors at the other end. Preferably this spinner assembly unit can easily be dismantled so as to release the air impellor and/or the cascade spinner unit from it, so as to facilitate servicing.

As a result of constructing the air impellor and the cascade spinner unit as a single spinner assembly unit, it is possible to provide the entire unit within an outer housing that can be profiled to optimise air flow around the outside of the housing.

Preferably the spinner assembly unit is fitted within an outer duct, whereupon the profiling of the housing of the spinner assembly unit can contribute to control of the flow of air through the duct between the spinner assembly unit and the duct. This is valuable in systems such as those described in WO96/38391 and PCT/EP00/09916. A plurality of the units may supply a single collector, e.g., as in WO99/51535.

The air supply passages and the air supply outlet means in the spinner unit can be of conventional construction. The velocity and direction of the air as it emerges from some or all of the air supply outlets is preferably controlled by appropriate construction of the air supply outlet means. Preferably these means comprise nozzles which have the effect of accelerating the pressurised air which is received from the diffuser. The nozzles may be slots and may contain blades to control the orientation of the air stream as they emerge, for instance as described in the GB and WO publications mentioned above.

The prime mover of the axial compressor can be a gas turbine engine but is preferably an electric motor. Gas turbines and electric motors suitable for use in the axial compressor are commercially available. The prime mover or motor should be capable of generating a rotational speed of at least 10000rpm and usually 15000 to 40000, preferably 15000 to 30000rpm, often around 25000rpm. Suitable electric motors are available from E and A in Switzerland, Parvex in France, Siemens in Germany, Kavo in Germany and ABB in Sweden.

The motor may have a power of as much as 100 or 200kW but in practice, with appropriate design of the air passages and at low or moderate air ring pressures, it is easily possible to obtain the necessary air flow with a motor of much lower power, for instance 50kW or even less. Generally the motor has a power of at least 75kW. The motor is preferably cooled by heat exchange fluid. This can be a gas but generally it is a liquid, normally water.

A typical axial compressor will operate with an air flow rate of around 2 to 7, often about 3.5 to 4, kg/s and will give a pressure ratio (pressure at the outlet from the diffuser:pressure at the inlet to the inlet zone) of around 1.05 to 1.3, often around 1.1 to 1.25. The large amount of air flow in combination with the relatively moderate pressure rise means that a one stage axial compressor is usually adequate for use in the invention. However, if circumstances demand, two or more axial compressors can be arranged in series, with the stator of the first discharging to the inlet of the second.

The prime mover rotates the compressor rotor through the annular passage. The rotor comprises rotor blades. The radial dimensions of the rotor blades are chosen, in accordance with common practice, to minimise inlet shock losses. Thus the dimensions are chosen to minimise inlet relative Mach number at the rotor shroud (the exterior surface of the rotating blades). The inlet relative Mach number is determined by the peripheral or tangential speed of the blades and the inlet flow velocity.

There is a stator between the rotor blades in the compressor position and the annular diffuser. The stator comprises stator blades.

The prime mover is preferably mounted coaxially within the axial compressor unit. Since it is desirable for the drive shaft from the motor or other prime mover to the blades to be as short as reasonably possible, the inner dimension of the blades, and of the compressor, has to be sufficiently large to allow installation of the motor, and this will impact also on the radius of the shroud.

The inlet relative Mach number preferably ranges between around 0.55 to 0.75, generally about 0.6 to 0.7 (e.g., 0.65) at the hub and close to 1 at the shroud, generally about 0.9 to 1.1, preferably about 1 to 1.05.

Rotor air deflection is preferably low and is typically a conventional value, for instance around 12° to 18°, preferably about 15°, at the hub and 3° to 8°, preferably about 5°, at the shroud.

Corresponding values for the stator blades are an inlet Mach number of around 0.35 to 0.5, typically about 0.4 to 0.45, a deflection angle typically of 25° to 45°, preferably around 30° to 40°, and an outlet Mach number typically of around 0.3 to 0.4, preferably around 0.35.

The swirl component of the exit flow is preferably substantially eliminated in the stator.

At the Mach numbers indicated above, the rotor and stator blades may be aerofoil construction of the type known as a double circular arc since this promotes their robustness and ensures that they are adequate at these Mach numbers. At higher Mach numbers, thinner blades may be preferred to improve efficiency.

The inlet channel shroud wall is preferably shaped as a bell mouth since this facilitates keeping the boundary layer thin at the rotor inlet. This is beneficial for performance since adequate flow velocity and hence relative flow angle is then optimised at the sensitive shroud region where the Mach number is at its peak. This results in the axial compressor having a low loss design.

The hub wall at the inlet is defined by a cup which covers the disc frontal area of the rotor.

The direction of the air flow upstream of the inlet channel can be either radially inwards or axial.

In order to minimise pressure losses in the downstream ducting it is desirable to reduce considerably the stator exit flow velocity and to do this with as little drop as possible. For this purpose the annular diffuser preferably extends from close to the stator blades and is preferably a straight walled annular diffuser. It preferably has a ratio of length to inlet height of about 5 to 9, generally around 6 to 8, e.g., 7, and an area ratio of around 1.9 to 2.5, typically around 2 to 2.2, e.g., about 2.1.

These values result in about 60 to 70%, preferably around 65%, of the dynamic velocity at the stator exit being recovered, i.e., the static pressure from the diffuser inlet to the exit rises with about 65% of the difference between total and static pressure at the diffuser inlet.

Accordingly, the flow velocity can be reduced from around 100 to 150m/s, preferably around 120 to 140m/s, e.g., 130m/s, at the inlet to around 40 to 65m/s preferably 50 to 60m/s, e.g., around 55m/s at the exit with only a small loss (e.g., 1 to 1.5%) in total pressure. The total adiabatic efficiency for the axial compressor is typically around 80 to 90%, e.g., 85%, at an exit plane of the stator and about 75 to 85%, e.g., about 80%, at an exit plane of the diffuser.

The overall design of the compressor is preferably such that the compressor has high efficiency (at least 75%) with respect to conversion of electrical energy to flow energy (pressure and kinetic energy).

All the values quoted above are the values for the design point operating condition of the axial compressor. Naturally in some instance it may be deliberately or inadvertently operated at conditions different from the design conditions.

The cascade spinner unit is preferably a unit in which each fiberising rotor is mounted coaxial with a motor for driving that rotor. Thus, when the centrifugal spinner unit is a conventional unit having four rotors, there will be four motors. The coaxial mounting may include an indirect drive as shown in WO96/38391 Figure 4.

Preferably the cascade spinner unit is a unit as described in PCT/EP01/.... filed even date herewith claiming priority from EP 00122246.2, reference PRL04337WO. In particular, the cascade spinner unit preferably comprises a plurality of individual centrifugal fiberising spinners each of which comprises its own spinner housing, a motor which is mounted in that housing, an axle which is actively driven by, and is co-axial with, that motor and which is surrounded by that housing and a rotor assembly comprising an inner flange mounted on the axle and a rotor releasably mounted on the flange distant from the motor wherein the axle is a rigid element which extends from within the motor to the flange through a primary bearing assembly between the axle element and the housing which surrounds the axle, the flange is non-movably fixed on the axle, and the spinner includes passages for leading liquid coolant through the housing and for cooling the motor. The combination of those spinners with the combination of that spinner unit with the axial compressor results in a remarkably compact spinner assembly unit which is much smaller, lighter and more adjustable than any prior spinner assembly unit.

The invention is illustrated in the accompanying drawings in which
Figure 1 is a side view of a preferred spinner assembly unit containing an axial compressor and a cascade spinner,
Figure 2 is a cross section on the line II-II of this unit,
Figure 3 is a cross section on the line III-III of this unit,
Figure 4 is a front view of this unit,
Figure 5 is a cross section through the axial compressor part of the unit (with the spinner unit component being shown diagrammatically).

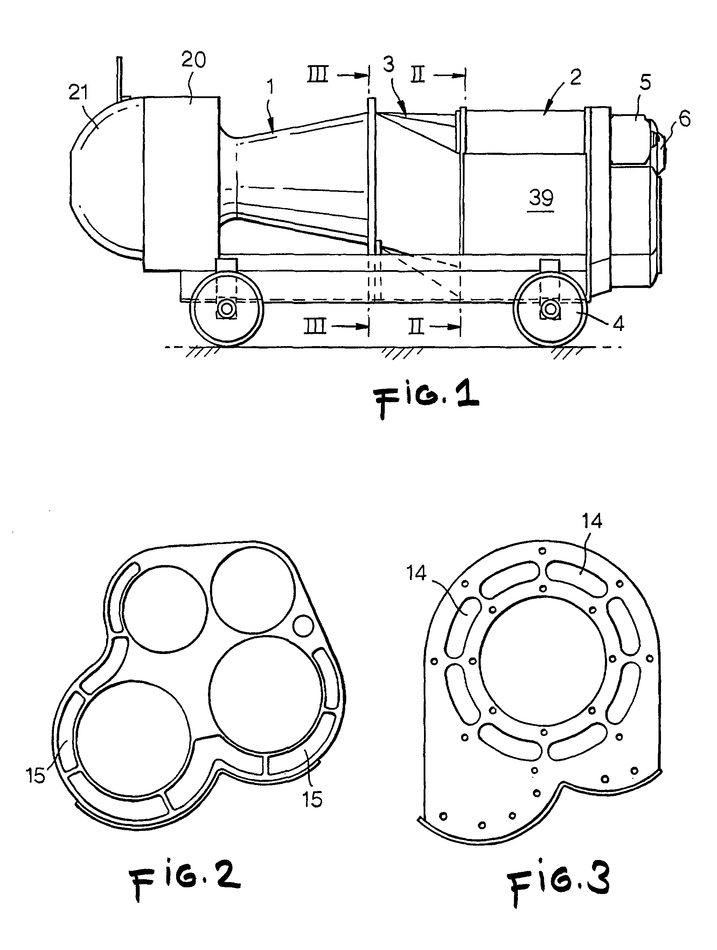

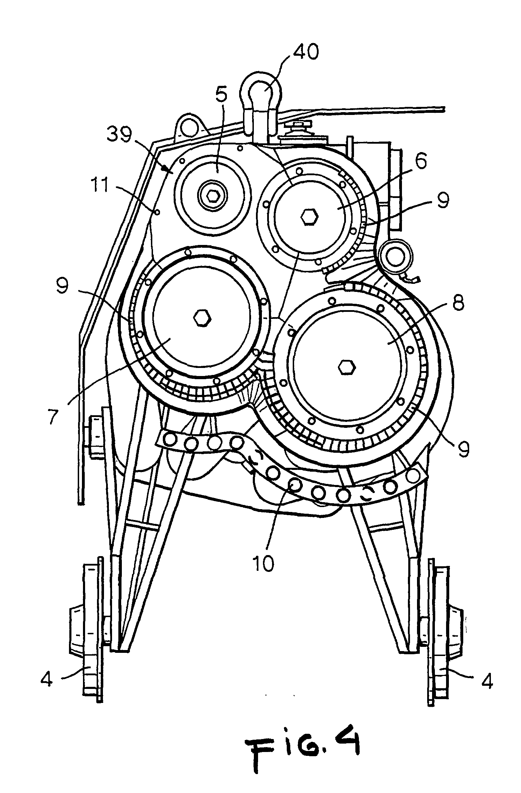

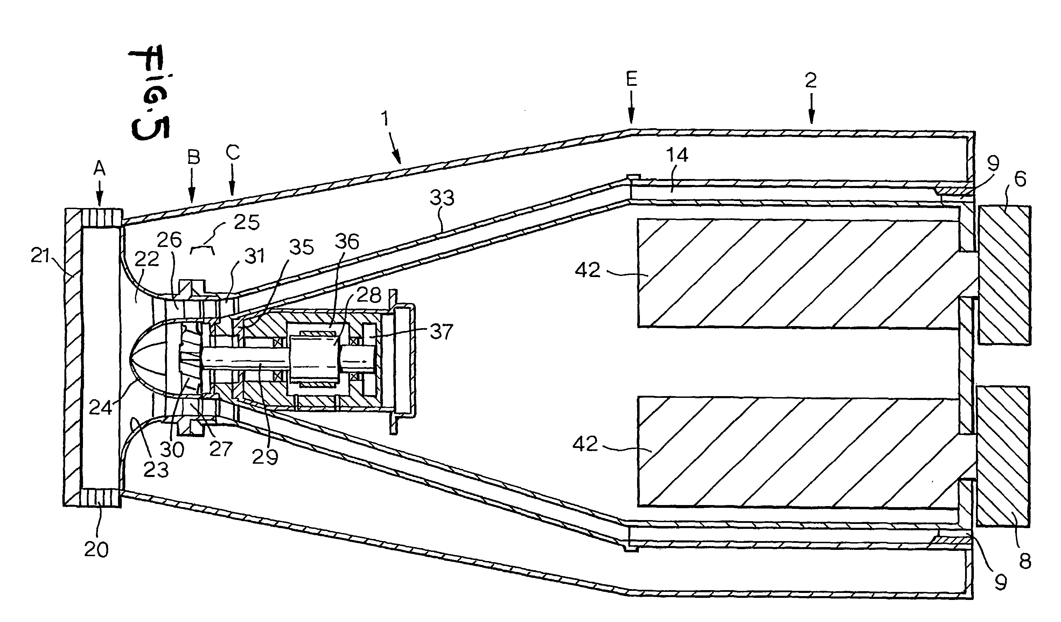

The spinner assembly unit shown in Figure 1 comprises an air impellor portion 1, a spinner unit portion 2 and a connecting portion 3. These may all be mounted in a relatively smooth outer metal casing 41 (not shown in Figure 1) which allows for streamline flow of air along the outer surface of the spinner assembly unit. The spinner assembly unit is shown as being mounted on wheels 4 but it may alternatively be suspended from hook 40. Rotors 5, 6, 7 and 8 are mounted on the front of the housing 39 of the spinner unit and are driven by coaxial motors 42, shown diagrammatically in Figure 5. Slots 9 extend around the outer parts of the periphery of each of rotors 6, 7 and 8 and contain blades for orienting the air flows, all as conventional. These slots discharge primary air. If the unit is designed to provide secondary air as well as primary air the secondary air may be discharged through orifices at positions such as those shown as 10 and 11.

Air is forced by the axial compressor in portion 1 through an annular air diffuser 33, discussed below, to an essentially annular diffuser outlet 14. This leads into air passages (not shown) in the connecting portion 3 which lead to conventional air supply passages 15 in the spinner portion 2. These lead to slots 9 (and to any secondary air outlets) in conventional manner. The slots 9 are narrower than the passages 15 and may be constructed to act as nozzles to accelerate the air as it emerges through the slots.

At the rear end of the air impellor portion 1 there is an annular air inlet 20 and a noise barrier 21. The annular air inlet 20 is covered with filter material and leads into air inlet zone 22 which is defined on its outer surface by a bell mouth shroud 23 and on its inner surface by a hub 24.

The inlet zone leads into an annular compressor portion 25 comprising a compressor annulus 26, a compressor rotor blades 27, a stator 31, a water cooled electric motor 28 and a short shaft 29 directly driving the blade 27. The coolant water flows through inlet port 35, around annular jacket 36 and through outlet port 37. It may be fed through the spinner unit and discharged into the cloud of fibres.

The radius of the part 30 of the rotor which is protected by the hub 24 should be as small as possible having regard to the diameter of the motor 28 and the desirability for the shaft 29 to be as short as possible, thereby minimising the risk of eccentric rotation of the shaft.

A stator blade 31 is positioned downstream of the rotor blade 27 either in the compressor portion 25, or in the annular diffuser 33 which extends from the compressor portion to the diffuser outlet 14. Additional stator blades may be located within the annular diffuser portion if desired.

In a typical example, the area, temperature, pressures and air velocities at different points along the apparatus shown in Figure 5 are as shown in the following table, when the rotor is rotating at 23000rpm.

| | A | B | C | E | F | G |
|---|---|---|---|---|---|---|
| Area (m²) | 0.47 | 0.037 | 0.033 | 0.071 | 0.090 | 0.0235 |
| T (°K) | 308 | 308 | 329 | 329 | 329 | 329 |
| po (kPa) | 101.3 | 100.5 | 122.6 | 121.2 | 120.2 | 119.0 |
| p (kPa) | 101.2 | 91.5 | 112.8 | 119.2 | 119.0 | 95.1 |
| Mach | 0.027 | 0.37 | 0.35 | 0.16 | 0.12 | 0.58 |
| V m/s | 9.4 | 128 | 125 | 57 | 45 | 202 |

## Claims

1. A spinner assembly comprising an air supply system (1) and at least one centrifugal spinner unit (2) wherein
the or each centrifugal spinner unit (2) comprises a spinner unit housing (39), at least one fiberising rotor (5, 6, 7, 8) rotatably mounted on the housing for centrifugal fiberisation of vitreous melt supplied onto or into the rotor, and air supply outlet means (9) from within the housing for supply of a stream of air adjacent to the or each rotor for entrainment of fibres formed off the rotor or at least one of the rotors and air supply passages (15) in the housing leading to the air supply outlet means (9), and
the air supply system (1) comprises an air impellor for generating a flow of air through the air supply passages (15) and the air supply outlet means (9),
**characterised in that** the air impellor is directly attached to the spinner unit (2) or is indirectly attached to the spinner unit (2) by ducting less than 15 metres in length and
the air impellor comprises at least one axial compressor comprising an air inlet zone (22), a compressor portion (25) and an annular diffuser (33) which discharges towards the air supply passages,
wherein the compressor portion (25) comprises a prime mover (28) and an annulus (26) which leads from the air inlet zone and through which a compressor rotor (27) is rotated by the prime mover (28),
and the compressor portion (25) and/or the annular diffuser (33) includes a stator (31) wherein the stator minimises swirl in the diffuser,
and wherein the compressor is constructed so that the rotating compressor rotor (27) draws air into the compressor portion (25) and accelerates air into the diffuser (33) and thereby causes air to travel through the diffuser (33) under increasing pressure and reducing speed.

2. An assembly according to claim 1 in which there is a single spinner unit directly or indirectly attached to the air impellor.

3. An assembly according to claim 1 or claim 2 in which the air impellor is indirectly attached to the spinner unit by ducting less than 5 metres in length and is detachable from the ducting.

4. An assembly according to claim 1 or claim 2 in which the air impellor is directly attached to the spinner unit.

5. An assembly according to any preceding claim in which the spinner unit comprises a fiberising rotor mounted for rotation about a substantially vertical axis and comprising a disc or cup onto which or into which melt is poured and off which fibres are thrown from the surface of the disc or cup or through perforations in the walls of the cup.

6. An assembly according to any of claims 1 to 3 in which the spinner unit comprises at least three fiberising rotors mounted about a substantially horizontal axis whereby melt poured on to a first rotor is thrown on to subsequent rotors and is thrown off these, and optionally off the first rotor, as fibres.

7. An assembly according to claim 6 in which the air supply outlet means comprise primary air outlets associated with one or more of the fiberising rotors for blasting primary air substantially axially forward across the surface of the or each rotor.

8. An assembly according to claim 7 additionally comprising secondary air supply outlets for supply of air distant from the surface of the or each rotor.

9. An assembly according to any of claims 6 to 8 in which the air impellor and the cascade spinner unit are mounted end-to-end as a spinner assembly unit.

10. An assembly according to any preceding claim in which the air inlet zone of the axial compressor is shaped as a bell mouth which leads towards and surrounds a central convex cup thereby defining an annular compressor portion.

11. An assembly according to any preceding claim in which the prime mover is located coaxially with, and within, the annular diffuser.

12. An assembly according to any preceding claim in which the prime mover is a gas turbine.

13. An assembly according to any of claims 1 to 11 in which the motor is an electric motor.

14. An assembly according to any preceding claim in which the air supply outlet means comprise nozzles for accelerating the pressurised air from the diffuser and through the outlet means.

15. An assembly according to any preceding claim in which the air impellor comprises at least two of the axial compressors in series.

16. An assembly according to any preceding claim in which the or each centrifugal spinner unit comprises at least one spinner comprising a spinner housing, a motor which is mounted in that spinner housing, an axle which is rotatably driven by and is co-axial with that motor and which is surrounded by the housing, and a rotor assembly comprising an inner flange mounted on the axle and a rotor releasably mounted on the flange distant from the motor, wherein the axle is a rigid element which extends from within the motor to the flange through a primary bearing assembly between the axle element and the housing which surround the axle, the flange is non-movably fixed on the axle and the unit includes passages for leading liquid coolant through the housing and for cooling the motor.

## Revendications

1. Dispositif de filage comprenant un système d'alimentation en air (1) et au moins une unité de filage centrifuge (2), dans lequel
la ou chaque unité de filage centrifuge (2) comprend un carter (39) de l'unité de filage, au moins un rotor (5, 6, 7, 8) de mise à l'état fibreux monté de manière à pouvoir tourner dans le carter pour exécuter par centrifugation la mise à l'état fibreux d'une masse vitreuse sur ou dans le rotor, et des moyens (9) de sortie d'alimentation en air délivré par le boîtier pour envoyer un flux d'air adjacent au ou à chaque rotor pour l'entraînement de fibres détachées du rotor ou d'au moins l'un des rotors et des passages d'alimentation d'air (15) dans le carter aboutissant aux moyens (9) de sortie d'alimentation en air, et
le système d'alimentation en air (1) comprend un rotor d'entraînement de l'air pour générer un écoulement d'air dans les passages d'alimentation en air (15) et les moyens de sortie d'alimentation en air (9),
**caractérisé en ce que** le rotor d'entraînement d'air est fixé directement à l'unité de filage (2) ou est fixé indirectement à l'unité de filage (2) par un conduit d'une longueur inférieure à 15 mètres, et
le rotor d'entraînement de l'air comprend au moins un compresseur axial comprimant une zone d'entrée de l'air (22), une partie (25) du compresseur et un diffuseur annulaire (33), qui réalise un refoulement en direction des passages d'alimentation en air,
dans lequel la partie (25) du compresseur comprend une machine motrice (28) et un anneau (26) qui s'étend depuis la zone d'entrée de l'air et dans laquelle un rotor (27) du compresseur est entraîné en rotation par la machine motrice (28),
et la partie (25) du compresseur et/ou le diffuseur annulaire (33) incluent un stator (31), le stator réduisant le tourbillonnement dans le diffuseur,
et dans lequel le compresseur est agencé de telle sorte que le rotor tournant (28) du compresseur entraîne l'air dans la partie (25) du compresseur et accélère l'air envoyé au diffuseur (33) et de ce fait amène l'air à se déplacer dans le diffuseur (33) avec un accroissement de la pression et une réduction de la vitesse.

2. Dispositif selon la revendication 1, dans lequel il est prévu une seule unité de filage fixée directement ou indirectement au rotor d'entraînement de l'air.

3. Dispositif selon la revendication 1 ou. la revendication 2, dans lequel le rotor d'entraînement de l'air est fixé indirectement à l'unité de filage par un conduit d'une longueur inférieure à 5 mètres et peut être détaché du conduit.

4. Dispositif selon la revendication 1 ou la revendication 2, dans lequel le rotor d'entraînement de l'air est fixé directement à l'unité de filage.

5. Dispositif selon l'une quelconque des revendications précédentes, dans lequel l'unité de filage comprend un rotor de mise à l'état fibreux monté pour tourner autour d'un axe sensiblement vertical et comprenant un disque ou un pot, sur ou dans lequel la masse fondue est introduite et à partir duquel des fibres sont tirées à partir de la surface du disque ou de la coupelle ou à travers des perforations formées dans les parois du pot.

6. Dispositif selon l'une quelconque des revendications 1 à 3, dans lequel l'unité de filage comprend au moins trois rotors de mise à l'état fibreux monté autour d'un axe sensiblement horizontal, ce qui a pour effet que la masse fondue introduite dans un premier rotor est tirée sur des rotors installés en aval et est tirée de ces rotors et facultativement est retirée du premier rotor, sous la forme de fibres.

7. Dispositif selon la revendication 6, dans lequel les moyens de sortie d'alimentation en air comprennent des sorties d'air primaire associées à un ou plusieurs rotors de mise à l'état fibreux servant à projeter de l'air primaire sensiblement axialement vers l'avant en travers de la surface du ou de chaque rotor.

8. Dispositif selon la revendication 7, comprenant en outre des sorties d'alimentation en air secondaire pour envoyer de l'air à distance de la surface du ou de chaque rotor.

9. Dispositif selon l'une quelconque des revendications 6 à 8, dans lequel le rotor d'entraînement de l'air et l'unité de filage en cascade sont montés bout-à-bout sous la forme d'une unité formant dispositif de filage.

10. Dispositif selon l'une quelconque des revendications précédentes, dans lequel la zone d'entrée de l'air du compresseur axial est conformée sous la forme d'une embouchure en cloche qui est dirigée vers et autour d'un pot convexe central en définissant de ce fait une partie annulaire du compresseur.

11. Dispositif selon l'une quelconque des revendications précédentes, dans lequel la machine motrice est disposée coaxialement à et dans le diffuseur annulaire.

12. Dispositif selon l'une quelconque des revendications précédentes, dans lequel la machine motrice est une turbine à gaz.

13. Dispositif selon l'une quelconque des revendications 1 à 11, dans lequel le moteur est un moteur électrique.

14. Dispositif selon l'une quelconque des revendications précédentes, dans lequel les moyens de sortie d'alimentation en air comprennent des tuyères pour accélérer l'air comprimé provenant du diffuseur et envoyé à travers les moyens de sortie.

15. Dispositif selon l'une quelconque des revendications précédentes, dans lequel le rotor d'entraînement de l'air comprend au moins deux des compresseurs axiaux en série.

16. Dispositif selon l'une quelconque des revendications précédentes, dans lequel la ou chaque unité de filage centrifuge comprend au moins un élément de filage comportant un carter d'élément de filage, un moteur qui est monté dans le carter de l'élément de filage, un axe, qui est entraîné de manière à pouvoir tourner par et est coaxial à ce moteur et qui est entouré par le carter, et un ensemble de rotor comprenant une bride intérieure montée sur l'axe et un rotor monté de façon amovible sur la bride à distance du moteur, l'axe étant un élément rigide qui s'étend depuis l'intérieur du moteur jusqu'à la bride en traversant un ensemble de paliers primaires entre l'élément d'axe et le carter, qui entoure l'axe, la bride est fixée de façon inamovible sur l'axe et l'unité inclut des passages pour guider un réfrigérant liquide à travers le carter et pour refroidir le moteur.

## Patentansprüche

1. Schleudervorrichtungs-Anordnung umfassend ein Luftzufuhrsystem (1) und mindestens eine Zentrifugal-Schleudervorrichtungseinheit (2), worin
die oder jede Zentrifugal-Schleudervorrichtungseinheit (2) ein Schleudervorrichtungseinheit-Gehäuse (39), mindestens einen Zerfaserungsrotor (5, 6, 7, 8), der drehbar an dem Gehäuse montiert ist, zur Schleuderzerfaserung von glasartiger Schmelze, die auf den oder in den Rotor zugeführt wird, und eine Luftzufuhr-Auslasseinrichtung (9) von innerhalb des Gehäuses zum Zuführen eines Luftstroms in Nachbarschaft zu dem oder jedem Rotor zum Mitführen von Fasern, die von dem Rotor oder mindestens einem der Rotoren weg gebildet werden, und Luftzufuhrdurchgänge (15) in dem Gehäuse, die zu der Luftzufuhr-Auslasseinrichtung (9) führen, umfasst und
das Luftzufuhrsystem (1) einen Luftimpeller zum Erzeugen eines Luftstroms durch die Luftzufuhrdurchgänge (15) und die Luftzufuhr-Auslasseinrichtung (9) umfasst,
**dadurch gekennzeichnet, dass** der Luftimpeller direkt an der Schleudervorrichtungseinheit (2) angebracht ist oder indirekt an der Schleudervorrichtungseinheit (2) durch eine Leitung von weniger als 15 m Länge angebracht ist, und
der Luftimpeller mindestens einen Axialkompressor umfassend eine Lufteinlasszone (22), ein Kompressorteil (25) und einen Ringdiffusor (33), der in Richtung der Luftzufuhrdurchgänge ablässt, umfasst,
wobei das Kompressorteil (25) eine Antriebseinrichtung (28) und einen Ring (26), der von der Lufteinlasszone führt und durch den ein Kompressorrotor (27) durch die Antriebseinrichtung (28) gedreht wird, umfasst
und das Kompressorteil (25) und/oder der Ringdiffusor (33) einen Stator (31) beinhalten, wobei der Stator die Verwirbelung im Diffusor minimiert,
und worin der Kompressor so gestaltet ist, dass der rotierende Kompressorrotor (27) Luft in das Kompressorteil (25) zieht und Luft in den Diffusor (33) hinein beschleunigt und dadurch bewirkt, dass Luft mit steigendem Druck und sich verringernder Geschwindigkeit durch den Diffusor (33) befördert wird.

2. Anordnung nach Anspruch 1, in der es eine einzelne Schleudervorrichtungseinheit gibt, die direkt oder indirekt an dem Luftimpeller angebracht ist.

3. Anordnung nach Anspruch 1 oder Anspruch 2, in der der Luftimpeller indirekt an die Schleudervorrichtungseinheit durch eine Leitung von weniger als 5 m Länge angebracht ist und von der Leitung abnehmbar ist.

4. Anordnung nach Anspruch 1 oder Anspruch 2, in der der Luftimpeller direkt an der Schleudervorrichtungseinheit angebracht ist.

5. Anordnung nach irgendeinem vorhergehenden Anspruch, in der die Schleudervorrichtungseinheit einen Zerfaserungsrotor umfasst, der zur Rotation um eine im wesentlichen vertikale Achse montiert ist und eine Scheibe oder einen Becher umfasst, auf die/den oder in die/den Schmelze gegossen wird und von der/dem Fasern von der Oberfläche der Scheibe oder dem Becher oder durch Perforationen in den Wänden des Bechers geschleudert werden.

6. Anordnung nach irgendeinem der Ansprüche 1 bis 3, in der die Schleudervorrichtungseinheit mindestens drei Zerfaserungsrotoren umfasst, die um eine im wesentlichen horizontale Achse montiert sind, wodurch Schmelze, die auf einen ersten Rotor gegossen wird, auf die nachfolgenden Rotoren geschleudert wird und von diesen, und gegebenenfalls von dem ersten Rotor, als Fasern abgeschleudert wird.

7. Anordnung nach Anspruch 6, in der die Luftzufuhr-Auslasseinrichtung primäre Luftauslassöffnungen umfasst, die mit einem oder mehreren der Zerfaserungsrotoren verbunden sind, um Primärluft im wesentlichen axial nach vorne über die Oberfläche des oder jedes Rotors abzustrahlen.

8. Anordnung nach Anspruch 7, die zusätzlich sekundäre Luftzufuhr-Auslass-öffnungen für die Luftzufuhr entfernt von der Oberfläche des oder jedes Rotors umfasst.

9. Anordnung nach irgendeinem der Ansprüche 6 bis 8, in der der Luftimpeller und die Kaskadenschleudervorrichtungseinheit Ende an Ende als eine Schleudervorrichtungs-Anordnungseinheit montiert sind.

10. Anordnung nach irgendeinem vorhergehenden Anspruch, in der die Lufteinlasszone des Axialkompressors als Trichterform gestaltet ist, die in Richtung zu einem zentralen konvexen Becher führt und ihn umgibt, wodurch ein ringförmiges Kompressorteil definiert wird.

11. Anordnung nach irgendeinem vorhergehenden Anspruch, in der die Antriebseinrichtung koaxial mit dem Ringdiffusor und innerhalb des Ringdiffusors angeordnet ist.

12. Anordnung nach irgendeinem vorhergehenden Anspruch, in der die Antriebseinrichtung eine Gasturbine ist.

13. Anordnung nach irgendeinem der Ansprüche 1 bis 11, in der der Motor ein Elektromotor ist.

14. Anordnung nach irgendeinem vorhergehenden Anspruch, in der die Luftzufuhr-Auslasseinrichtung Düsen zum Beschleunigen der unter Druck gesetzten Luft von dem Diffusor und durch die Auslasseinrichtung umfasst.

15. Anordnung nach irgendeinem vorhergehenden Anspruch, in der der Luftimpeller mindestens zwei der Axialkompressoren in Reihe umfasst.

16. Anordnung nach irgendeinem vorhergehenden Anspruch, in der die oder jede Zentrifugal-Schleudervorrichtungseinheit mindestens eine Schleudervorrichtung umfassend ein Schleudervorrichtungsgehäuse, einen Motor, der in diesem Schleudervorrichtungsgehäuse montiert ist, eine Achse, die in drehbarer Weise durch diesen Motor angetrieben wird und damit koaxial ist und von dem Gehäuse umgeben ist, und eine Rotoranordnung umfassend einen Innenflansch, der auf der Achse montiert ist, und einen Rotor, der in ablösbarer Weise auf dem Flansch entfernt von dem Motor montiert ist, umfasst, wobei die Achse ein starres Element ist, das sich von innerhalb des Motors zu dem Flansch durch eine primäre Lageranordnung zwischen dem Achselement und dem Gehäuse, das die Achse umgibt, erstreckt, der Flansch in unbeweglicher Weise an der Achse fixiert ist und die Einheit Durchgänge zum Durchleiten von flüssigem Kühlmittel durch das Gehäuse und zum Kühlen des Motors beinhaltet.
